# EUROPÄISCHE PATENTANMELDUNG

(11) **EP 3 413 254 A1**
(43) Veröffentlichungstag der Anmeldung: **12.12.2018**
(21) Anmeldenummer: 17174587.0
(22) Anmeldetag: 06.06.2017
(51) Int. Cl.: G06Q 20/40

(54) **VERFAHREN UND VORRICHTUNG ZUM BEREITSTELLEN EINES TRANSAKTIONSDATENSATZES**

(71) Anmelder: Siemens Aktiengesellschaft, 80333 München (DE)
(72) Erfinder: Aschauer, Hans, 81829 München (DE); Falk, Rainer, 85586 Poing (DE); Heintel, Markus, 81377 München (DE)

(57) **Zusammenfassung**

Die Erfindung beansprucht ein Verfahren zur Bereitstellung eines Transaktionsdatensatzes (410) zur Ausführung einer von einem Sender (D1, D2) initiierten und für einen Empfänger (D3, D4, D5) bestimmten, geschützten Transaktion (T) mit folgenden Verfahrensschritten:
- Bereitstellen eines ersten Klartext-Programmcodes (460), der die Instruktionen/Anweisungen/Befehlsfolge zur Ausführung der Transaktion umfasst;
- Geheimhalten des Klartext-Programmcodes (460), wobei der geheimgehaltene Klartext-Programmcode als zweiter Programmcode bereitgestellt wird,
dadurch gekennzeichnet, dass der Transaktionsdatensatz mindestens einen Commitment-Wert enthält, mit Hilfe dessen die Integrität des zweiten zu einem vorgebbaren Zeitpunkt bereitgestellten Programmcodes überprüft wird.

## Beschreibung

Die Erfindung bezieht sich auf ein Verfahren und eine Vorrichtung zum Bereitstellen eines Transaktionsdatensatzes insbesondere für eine Blockkette.

### Hintergrund

Die Technologie von Blockketten (engl. Blockchains bzw. Block Chains) bzw. "Distributed Ledgers" ist aktuell ein intensiv diskutierte Technologie.

Unter einer Blockchain wird im allgemeinen eine Datenbank verstanden, deren Integrität (Sicherung gegen nachträgliche Manipulation) durch Speicherung des Einwegfunktionswertes , auch Hashwert genannt, des vorangehenden Datensatzes im jeweils nachfolgenden, also durch kryptographische Verkettung, gesichert ist. Das Verfahren ist die technische Basis für sogenannte Kryptowährungen (z.B. Bitcoin), kann aber ggf. darüber hinaus in verteilten Systemen zur Verbesserung/ Vereinfachung der Transaktionssicherheit im Vergleich zu den herkömmlichen zentralen (Datenbank-)Systemen beitragen. Neben Anwendungen für dezentrale Bezahlsysteme (z.B.Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz umfasst im allgemeinen Programmcode. Unter dem Begriff "Smart Contract" wird ein Programmcode verstanden, in dem zum Erstellungszeitpunkt Bedingungen definiert und zu seiner Laufzeit ausgewertet werden können, so dass bestimmte Transaktionen in einer bestimmten (Geldbetrags-)Höhe an einen bestimmten oder mehrere bestimmte Empfänger durchgeführt werden können oder nicht.

Mit Hilfe des Transaktionsdatensatzes kann die Transaktion ausgeführt werden. Unter einer Transaktion wird eine gegenseitige Übertragung von virtuellen oder realen Gütern bzw. einer Zahlung oder anderen Informationen von einem Sender zu einem Empfänger verstanden. Sender und Empfänger sind in der Regel Geschäftspartner bzw. Firmen bzw. deren EDV-technischen Rechner bei sogenanntem Buchgeld, dessen eine Ausführungsform Bitcoin sein kann. Unter Umständen kann ein Vermittler der Transaktion ausführen und/oder überwachen.

Bei Bitcoin wird eine relativ einfache stackbasierte Laufzeitumgebung verwendet. Eine Transaktion umfasst dabei die Prüfsumme zur Überprüfung der Gültigkeit der Transaktion. Die Blockchain-Plattform Ethereum unterstützt eine frei programmierbare Laufzeitumgebung, sodass der Programmcode einer Blockchain flexibel realisiert werden kann. Dabei wird z.B. eine Geschäftslogik als Programmcode im Transaktionsdatensatz und damit in der Blockchain hinterlegt. So gesehen ist die auszuführende Transaktion in einem (Ketten-)Glied der Blockchain hinterlegt. Demnach ist in diesem Zusammenhang eine Unterscheidung zwischen der auszuführenden Transaktion und dem Transaktionsdatensatz, der zur Ausführung der Transaktion ausgestaltet ist, ist kaum möglich.

Aus EP 16205227.8 ist schon vorgeschlagen worden, einen "Smart Contract" einer Blockchain zu obfuszieren bzw. zu verschleiern. Es kann ein Hashwert der Klartext-Version des Programmcodes zusammen mit der obfuszierten Version in der Blockchain hinterlegt werden, um den Smart Contract zu schützen.

Eine Aufgabe der vorliegenden Erfindung ist es, Verfahren und Vorrichtungen bereitzustellen, welche eine Alternative bzw. eine Verbesserung zu den bekannten Verfahren bieten.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zur Bereitstellung eines Transaktionsdatensatzes zur Ausführung einer von einem Sender initiierten und für einen Empfänger bestimmten, geschützten Transaktion mit folgenden Verfahrensschritten:
- Bereitstellen eines ersten Klartext-Programmcodes, der die Instruktionen/Anweisungen/Befehlsfolge zur Ausführung der Transaktion umfasst;
- Geheimhalten des Klartext-Programmcodes, wobei der geheimgehaltene Klartext-Programmcode als zweiter Programmcode bereitgestellt wird,
dadurch gekennzeichnet, dass der Transaktionsdatensatz mindestens einen Commitment-Wert enthält, mit Hilfe dessen die Integrität des zweiten zu einem vorgebbaren Zeitpunkt bereitgestellten Programmcodes überprüft wird.

Der Klartext-Programmcode ist demnach bei der Ausführung der Transaktion ausführbar. Insbesondere kann die Zulässigkeit einer Transaktion geprüft werden, indem der Programmcode ausgeführt wird. Durch die Erfindung ist gewährleistet, dass die Zulässigkeit eines Transaktionsdatensatzes erst nach dem vorgebbaren Zeitpunkt prüfbar ist. Ebenso kann bei der Ausführung des Programmcodes ein zweiter Transaktionsdatensatz gemäß dem ausgeführten Programmcode gebildet werden. Dabei ist gewährleistet, dass die zweite Transaktion erst nach dem vorgebbaren Zeitpunkt gebildet wird.

Der Commitment-Wert kann ein kryptographischer Einwegfunktionswert sein.

Eine Weiterbildung der Erfindung sieht vor, dass der vorgebbare Zeitpunkt durch einen Zeitstempel vorgegeben ist, welcher in dem Transaktionsdatensatz enthalten und dem Commitment-Wert zugeordnet sein kann.

Eine Weiterbildung der Erfindung sieht vor, dass der Klartext-Programmcode einen nicht ausführbarer Salt-Wert umfasst bzw. der Salt-Wert in den Klartex-Programmcode eingeführt wird. Damit kann eine unbefugte Offenlegung nach dessen Geheimhaltung erschwert werden.

Ein Salt-Wert ist im Zusammenhang mit dieser Erfindung eine meist zufällig erzeugte Zeichenfolge, die an einen gegebenen Klartext vor der Verwendung als Eingabe einer Hashfunktion angehängt wird. Die Verwendung eines Salts erhöht den Aufwand von Angriffen, aa nicht mehr in einer Liste von verschlüsselten Werten (Hashtabelle) der zugehörige unverschlüsselte Wert nachgeschlagen werden kann, sondern für jeden Klartext hash (Klartext + Salt) = bekannter Hash überprüft werden muss. Das kostet viel Rechenzeit.

Eine Weiterbildung der Erfindung sieht vor, dass der erste Klartext-Programmcode auf einem anderen (unabhängigen) Kommunikationsweg vom Sender zum Empfänger übermittelt wird als der zweite Programmcode.

Ein weiterer Aspekt der Erfindung ist eine Verwendung des Transaktionsdatensatzes nach dem vorhergehend erläuterten Verfahren und dessen Ausführungsformen als kryptographisch geschützte Transaktion eines Gliedes einer Blockkette.

Das Verfahren wird vorzugsweise rechnergestützt durchgeführt. Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, der Mittel oder anderer Aspekte und/oder Teilaspekte der Erfindung realisiert.

Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

Unter Mittel kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Im Zusammenhang mit der Erfindung wird unter einem Commitment-Wert ein Wert verstanden, auf den sich Sender und Empfänger der Transaktion festlegen. Dabei wird beispielsweise ein verschlüsselter Wert vom Sender und Empfänger übertragen. Ohne den Schlüssel kann der Empfänger nichts über den verschlüsselten Wert erfahren. Der Sender kann den Wert jedoch auch nicht mehr ändern, da der Wert schon beim Empfänger angekommen ist. Zum Aufdecken/Entschlüsseln des Wertes schickt der Sender dem Empfänger den Schlüssel. Ein Commitment-Verfahren besteht somit aus zwei Phasen. In der ersten Phase wird das Commitment erzeugt, mit dem sich der Sender auf einen Wert festgelegt. In der zweiten Phase wird das Commitment vom Empfänger aufgedeckt, nachdem dieser vom Sender eine Zusatzinformation zum Aufdecken erhalten hat.

Unter "Bereitstellen" kann im Zusammenhang mit der Erfindung beispielsweise ein Erstellen, Laden oder ein Speichern, des Transaktionsdatensatzes auf oder von einem Datenträger bzw. Plattform verstanden werden.

Ein weiterer Aspekt der Erfindung ist ein Block bzw. Glied einer Blockkette, welche ein oder mehrere Transaktionsdatensätze umfasst. Eine Blockkette ist aus mehreren Blöcken zusammengesetzt.

Unter "Glied" kann im Zusammenhang mit der Erfindung ein Block einer Blockkette verstanden werden, die insbesondere als Datenstruktur realisiert ist.

Unter "vorhergehender Glieder des ersten Gliedes der Blockkette" kann im Zusammenhang mit der Erfindung beispielsweise nur das Glied der Blockkette verstanden werden, das insbesondere dem ersten Glied direkt vorhergeht. Alternativ können unter "vorhergehender Glieder des ersten Gliedes der Blockkette" insbesondere auch alle Glieder der Blockkette verstanden werden, die dem ersten Glied vorhergehen.

Unter einem "Transaktionsdatensatz" können im Zusammenhang mit der Erfindung beispielsweise die Daten einer Transaktion einer Bockkette (engl. Blockchain) verstanden werden. Ein Transaktionsdatensatz kann beispielsweise einen Programmcode umfassen, der beispielsweise ein Smart Contract sein kann.

Jeder Beteiligte kann alle Transaktionsdatensätze zur Verfügung haben. Demnach ist beispielsweise der Kontostand von allen Beteiligten gegebenfalls anonymisiert und/oder pseudonymisiert bekannt.

Ein weiterer Aspekt der Erfindung betrifft eine Vorrichtung zur Bereitstellung eines Transaktionsdatensatzes zur Ausführung einer von einem Sender initiierten und für einen Empfänger bestimmten, geschützten Transaktion aufweisend:
- Mittel zum Bereitstellen eines ersten Klartext-Programmcodes, der die Instruktionen/Anweisungen/Befehlsfolge zur Ausführung der Transaktion umfasst;
- Mittel zum Geheimhalten des Klartext-Programmcodes, wobei der geheimgehaltene Klartext-Programmcode als zweiter Programmcode zur Verfügung steht,
dadurch gekennzeichnet, dass der Transaktionsdatensatz mindestens einen Commitment-Wert enthält und dazu ausgelegt ist, mit dessen Hilfe die Integrität des zweiten zu einem vorgebbaren Zeitpunkt bereitgestellten Programmcodes überprüfbar ist.

Dadurch wird der Programmcode zeitlich befristet geheimgehalten. Dennoch ist durch den Commitment-Wert der Programmcode schon vorab eindeutig bestimmt.

Bei einer weiteren Ausführungsform der Erfindung umfasst eine Vorrichtung zur Ausführung einer von einem Sender initiierten und für einen Empfänger bestimmten, geschützten Transaktion mit Hilfe des bereitgestellten Transaktionsdatensatzes nach einem der vorgenannten.

Des Weiteren wird ein Computerprogramm(produkt) mit Programmbefehlen zur Durchführung der genannten erfindungsgemäßen Verfahren beansprucht, das mittels der Programmbefehle konfiguriert wird, den Transaktionsdatensatz bereitzustellen und zumindest ein Glied einer Blockkette zu erstellen, wobei der bereitgestellte Transaktionsdatensatz in das erstellte Glied eingebunden wird.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht.

Die Verwendungen, Vorrichtungen und Computerprogramm(produkte) können entsprechend der Weiterbildungen/Ausführungsformen des oben genannten Verfahrens und dessen Weiterbildungen/Ausführungsformen ausgebildet sein.

Darüber hinaus ist eine Bereitstellungsvorrichtung zum Speichern und/oder Bereitstellen des Computerprogrammprodukts möglich. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass diese erfindungsgemäße Vorrichtung und/oder das Glied und/oder die Blockkette erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein Ausführungsbeispiel der Erfindung als System;
- Fig. 2: ein Ausführungsbeispiel der Erfindung als Blockkette.
- Fig. 3: ein Ausführungsbeispiel eines Transaktionsdatensatzes eines Gliedes einer Blockkette;

In den Figuren sind funktionsgleiche Elemente mit denselben Bezugszeichen versehen, sofern nichts anderes angegeben ist.

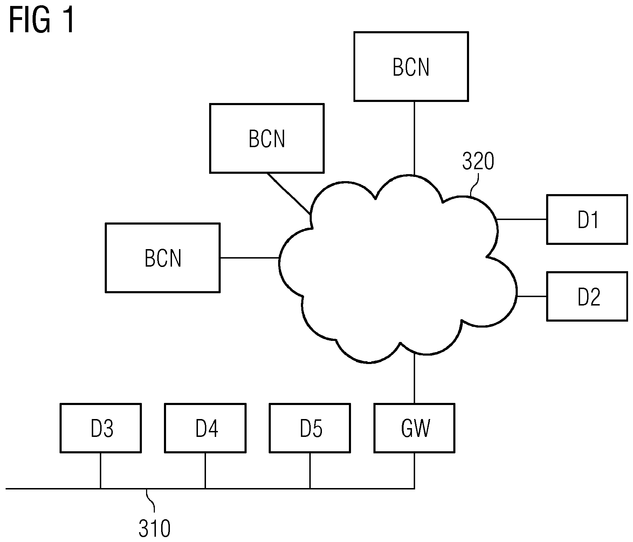

Die Fig. 1 zeigt ein Ausführungsbeispiel der Erfindung als System.

Im Einzelnen zeigt Fig. 1 ein System mit mehreren Geräten, beispielsweise ein erstes Feldgerät D1, ein zweites Feldgerät D2, ein drittes Feldgerät D3, ein viertes Feldgerät D4 und ein fünftes Feldgerät D5, einem Gateway GW und mehrere Blockketten-Knoten BCN, z.B.Bitcoin-Knoten oder Ethereum-Knoten. Das dritte Feldgerät D3, das vierte Feldgerät D4 und das fünfte Feldgerät D5 sind über ein Automatisierungsnetzwerk 310 miteinander vernetzt und über das Gateway mit dem Internet 320 verbunden. Das erste Feldgerät D1 und das zweite Feldgerät D2, sowie die Blockketten-Knoten BCN sind ebenfalls mit dem Internet 320 verbunden und stehen miteinander und über das Gateway GW mit den Feldgeräte D3-D5 kommunikativ in Verbindung.

Eine Blockketten-Plattform, wie sie beispielsweise von den Blockkettenknoten BCN verwendet wird, kann beispielsweise eine Blockkette mit Gliedern verwalten und erstellen.

Die Blockketten-Plattform ist beispielsweise in der Lage, den Programmcode, der z.B.den verschlüsselten Klartext-Programmcode (Smart-Contract) umfasst, auszuführen.

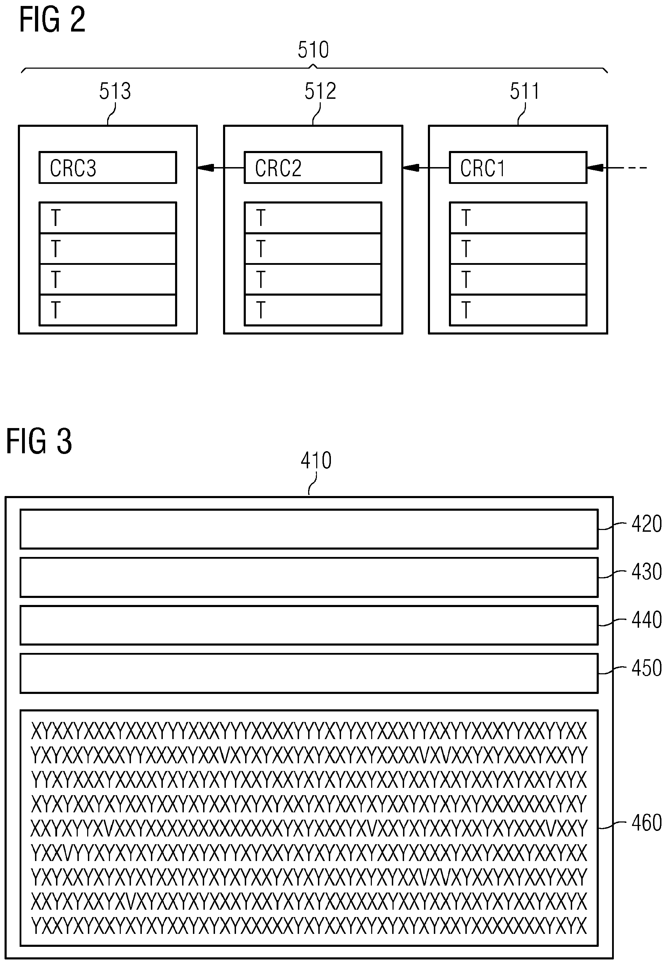

Die Fig. 2 zeigt ein Ausführungsbeispiel als Blockkette.

Im Einzelnen zeigt die Fig. 2 die Glieder, beispielsweise ein erstes Glied 511, ein zweites Glied 512 und ein drittes Glied 513, einer Blockkette 510.

Die Glieder umfassen jeweils mehrere Transaktionen T. Die Glieder umfassen jeweils zusätzlich noch einen kryptographischen Hashwert CRC1, CRC2, CRC3, der abhängig vom Vorgänger-Glied gebildet ist. Somit umfasst das erste Glied 511 einen ersten Hashwert CRC1 von seinem Vorgänger-Glied, das zweite Glied 512 einen Hashwert CRC2 vom ersten Glied 511, und das dritte Glied 513 einen Hashwert CRC3 vom zweiten Glied 512. Der Hash-Wert kann insbesondere ein kryptographischer Hash-Wert sein, der z.B. mittels SHA2-256, SHA2-384, SHA-3, BLAKE2 bestimmbar ist.

Mit Hilfe des Transaktionsdatensatzes 410 kann eine Transaktion T ausgeführt werden. Die Glieder können jeweils zu ihren Transaktionen T einen Hash(funktions)-Wert umfassen, der abhängig von den Transaktionsdatensätzen gebildet wird. Üblicherweise wird ein Hash-Baum, z.B.ein Merkle Tree oder Patricia Tree, verwendet, dessen Wurzel-Hash-Wert in einem Block bzw. Glied hinterlegt wird.

Ein Block kann weiterhin einen Zeitstempel, eine digitale Signatur, einen Proof-of-Work-Nachweis aufweisen. Unter "Proof-of-Work-Nachweis" kann in diesem Zusammenhang beispielsweise ein Lösen einer rechenintensiven Aufgabe verstanden werden, die insbesondere abhängig vom Glied-Inhalt/Inhalt eines Transaktionsdatensatzes zu lösen ist. Eine solche rechenintensive Aufgabe wird beispielsweise auch als kryptographisches Puzzle bezeichnet.

Die Fig. 3 zeigt ein Ausführungsbeispiel eines Transaktionsdatensatzes 410 eines Gliedes einer Blockkette 510.

Dabei ist der Programmcode 460, z.B.ein Smart Contract. Der Transaktionsdatensatz 410 kann noch weitere Daten umfassen wie beispielsweise einen Betreff 420 (z.B.Siemens SiemensABC), einen öffentlichen Schlüssel 430 (z.B. 3A76E21876EFA03787FD629A65E9E990...), den verwendeten Algorithmus 440 des öffentlichen Schlüssels 430 (z.B.ECC) und eine Parameterangabe 450 zu dem Algorithmus (z.B.Curve: brainpoolP160r1). Eine solche Transaktion kann z.B.eine Finanztransaktion wie z.B.einen Bezahlvorgang oder einen Handel mit Aktien oder anderen Wertpapieren, eine Zuordnung eines Objekts wie z.B.eines physikalischen Gemäldes oder eines digitalen Musikstücks, zu einem Eigentümer oder Urheber, eine Energiehandelstransaktion in einem Energieverteilnetz sein.

Der Transaktionsdatensatz 410 beinhaltet eine Hash-Wert (z.B. SHA256) für den Smart Contract 460. Damit kann der Smart Contract nicht mehr nachträglich unbemerkt verändert werden.

Weiterhin kann in 460 hinterlegt sein, dass eine Transaktion (z.B. von 50 (Geld-)Einheiten an den Empfänger z.B. destination12) auslöst wird, falls der Smart Contract nicht spätestens bis zu einem vorbestimmten Zeitraum, z.B. 31. 12.2016 um 23.59 offengelegt ist. Solch eine an einen Zeitraum gebundene Bedingung kann als eine Art "Vertragsstrafe" verstanden werden.

Die zugehörige Auflösung des Smart Contracts, d.h. der Klartext des Smart Contracts, kann wie folgt aussehen: Beispielsweise wird geprüft, ob ein vorbestimmter Schwellenwert über- und/oder unterschritten wird. Beispielsweise kann die Temperatur in München am 31. 12. 2016 über 10 Grad (Schwellenwert) liegen. Falls dies zutrifft, so werden 17 Einheiten (z.B. Bitcoins, Ethereum Air) an den Empfänger "destination12" transferiert.

Der Klartext-Vertrag kann erst nach dem 31.12.2016 veröffentlicht werden. Dann sind die Bedingungen des Smart Contracts erst bekannt, wenn der Zeitraum, auf den sich der Smart Contract bezieht, abgelaufen ist.

Durch einen in 460 festgelegtes Commitment-Wert soll nicht nur der Sender, sondern auch der Empfänger der Transaktion, an die der Smart Contract gebunden wird, den Inhalt des Smart Contracts kennen, bevor der Klartext-Vertrag veröffentlicht wird. Der oben genannte im Transaktionsdatensatz enthaltene Zeitstempel kann dem Commitment-Wert zugeordnet sein Dies kann in einer weiteren Ausführungsform auch so implementiert sein, dass der Sender der Transaktion an dem Empfänger auf einem unabhängigen (Kommunikations-)Weg den Klartext des Vertrags weitergibt; der Empfänger kann dann sofort verifizieren, dass genau dieser Klartext an die Transaktion gebunden ist.

Programmlogik und eingebettete Daten des Programmcodes 460 sind somit nicht zugreifbar. Ein sogenanntes "reverse engineering" wird damit erschwert. Auch wird eine gezielte Manipulation der in einem Smart Contract ausgewerteten Bedingungen zumindest erschwert, da erst zu einem späteren Zeitpunkt bekannt ist, welche Bedingungen in einem Smart Contract geprüft werden und welche Transaktionen bzw. Aktionen davon abhängig erzeugt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur Bereitstellung eines Transaktionsdatensatzes (410) zur Ausführung einer von einem Sender (D1, D2) initiierten und für einen Empfänger (D3, D4, D5) bestimmten, geschützten Transaktion (T) mit folgenden Verfahrensschritten:
- Bereitstellen eines ersten Klartext-Programmcodes (460), der die Instruktionen/Anweisungen/Befehlsfolge zur Ausführung der Transaktion umfasst;
- Geheimhalten des Klartext-Programmcodes (460), wobei der geheimgehaltene Klartext-Programmcode als zweiter Programmcode bereitgestellt wird,
**dadurch gekennzeichnet, dass** der Transaktionsdatensatz mindestens einen Commitment-Wert enthält, mit Hilfe dessen die Integrität des zweiten zu einem vorgebbaren Zeitpunkt bereitgestellten Programmcodes überprüft wird.

2. Verfahren nach dem vorhergehenden Anspruch, **dadurch gekennzeichnet, dass** der Commitment-Wert ein kryptographischer Einwegfunktionswert ist.

3. Verfahren nach einem der vorhergehenden Ansprüche, **dadurch gekennzeichnet, dass** der vorgebbare Zeitpunkt durch einen Zeitstempel vorgegeben ist.

4. Verfahren nach einem der vorhergehenden Ansprüche, **dadurch gekennzeichnet, dass** der Klartext-Programmcode einen nicht ausführbaren Salt-Wert umfasst.

5. Verfahren nach einem der vorhergehenden Ansprüche, **dadurch gekennzeichnet, dass** der erste Klartext-Programmcode auf einem anderen Kommunikationsweg vom Sender zum Empfänger übermittelt wird als der zweite Programmcode.

6. Verwendung des Transaktionsdatensatzes nach einem der vorhergehenden Verfahrensansprüche als kryptographisch geschützte Transaktion eines Gliedes (513, 512, 511) einer Blockkette (510).

7. Computerprogramm mit Programmbefehlen zur Durchführung des Verfahrens nach einem der vorhergehenden Verfahrensansprüche.

8. Vorrichtung zur Bereitstellung eines Transaktionsdatensatzes (410) zur Ausführung einer von einem Sender (D1, D2) initiierten und für einen Empfänger (D3, D4, D5) bestimmten, geschützten Transaktion (T) aufweisend:
- Mittel zum Bereitstellen eines ersten Klartext-Programmcodes (460), der die Instruktionen/Anweisungen/Befehlsfolge zur Ausführung der Transaktion umfasst;
- Mittel zum Geheimhalten des Klartext-Programmcodes (460), wobei der geheimgehaltene Klartext-Programmcode als zweiter Programmcode zur Verfügung steht,
**dadurch gekennzeichnet, dass** der Transaktionsdatensatz mindestens einen Commitment-Wert enthält und dazu ausgelegt ist, mit dessen Hilfe die Integrität des zweiten zu einem vorgebbaren Zeitpunkt bereitgestellten Programmcodes überprüfbar ist.

9. Vorrichtung nach dem vorhergehenden Anspruch, **dadurch gekennzeichnet, dass** der Transaktionsdatensatz als kryptographisch geschützte Transaktion in ein Glied (513, 512, 511) einer Blockkette (510) eingebettet ist.

10. Vorrichtung nach einem der vorhergehenden Vorrichtungsansprüchen, **dadurch gekennzeichnet, dass** der Commitment-Wert ein kryptographischer Einwegfunktionswert ist.

11. Vorrichtung nach einem der vorhergehenden Vorrichtungsansprüche, **dadurch gekennzeichnet, dass** der vorgebbare Zeitpunkt durch einen Zeitstempel vorgegeben ist.

12. Vorrichtung nach einem der vorhergehenden Vorrichtungsansprüche, **dadurch gekennzeichnet, dass** der Klartext-Programmcode einen nicht ausführbarer Salt-Wert umfasst.

13. Vorrichtung zur Ausführung einer von einem Sender initiierten und für einen Empfänger bestimmten, geschützten Transaktion mit Hilfe des bereitgestellten Transaktionsdatensatzes nach einem der vorhergehenden Verfahrensansprüche.

14. Computerprogrammprodukt mit Programmbefehlen für die Vorrichtung nach einem der vorhergehenden Ansprüche, das mittels der Programmbefehle konfiguriert wird, den Transaktionsdatensatz nach einem der vorhergehenden Verfahrensansprüche bereitzustellen und zumindest ein Glied einer Blockkette zu erstellen, wobei der bereitgestellte Transaktionsdatensatz in das erstellte Glied eingebunden wird.
